# EUROPEAN PATENT APPLICATION

(11) **EP 4 464 536 A1**
(43) Date of publication of application: **20.11.2024**
(21) Application number: 24176648.4
(22) Date of filing: 17.05.2024
(51) Int. Cl.: B60L 3/04, B60R 16/03

(54) **SKIRT ASSEMBLY FOR A BEV TRUCK**

(30) Priority: 19.05.2023 NL 2034865
(71) Applicant: DAF Trucks N.V., 5643 TW Eindhoven (NL)
(72) Inventor: QUIST, Bas, 5643 TW Eindhoven (NL); MADORRAN TIL, Gonzalo, 5643 TW Eindhoven (NL)
(74) Representative: V.O.

(57) **Abstract**

Battery electric vehicle truck comprising a skirt assembly, wherein the skirt assembly comprises a bracket comprising a plurality of mounting surfaces and wherein the bracket is arranged to be fixed to a chassis of the truck; a skirt attached to a first mounting surface via a skirt connecting arrangement; a high voltage circuit interrupter arranged to, when activated, interrupt current flowing through a high voltage circuit of the truck, the high voltage cut-loop provided on a second mounting surface; and wherein the skirt comprises a break zone that once broken exposes the high voltage circuit interrupter.

## Description

The invention relates to a BEV truck comprising a skirt assembly.

Battery electric vehicle trucks, or BEV trucks, are electric vehicles that are designed to transport cargo without relying on fossil fuels. These trucks use large batteries to power electric motors that drive the vehicle, allowing them to carry heavy loads while emitting no greenhouse gases or other harmful pollutants. With the increasing concern for climate change and the need for sustainable transportation solutions, there exists a need for the use of BEV trucks for the hauling of cargo.

A BEV truck has a high voltage circuit, which is an essential component as it provides the power required to drive the electric motor of the truck. The high voltage circuit comprises a battery pack, which is responsible for storing the electrical energy required to power the vehicle. Typically, these batteries are high-capacity LFP batteries (Lithium FerroPhosphate) that can store enough energy to provide sufficient driving range. These batteries operate at a high voltage, typically in the range of several hundred volts or more, which enables them to store and release large amounts of electrical energy quickly and efficiently.

The high voltage circuit is an important aspect of a BEV truck; however, it may pose a safety risk when damaged. In order to mitigate such safety risks, the high voltage circuit of a BEV truck is commonly equipped with a high voltage interrupter. Such an interrupter typically activates a high-voltage fuse or circuit breaker that is designed to disconnect the battery pack from the rest of the high-voltage circuit. An example of a commonly used high voltage circuit interrupter is a cut-loop. A cut-loop is commonly provided such that it can be cut, for example by emergency services, in case the battery pack should be disconnected from the high-voltage circuit but the high-voltage fuse or circuit breaker did not trip.

A disadvantage of the high voltage interrupter is that it is commonly difficult to reach, in order to prevent unwanted activation of the interrupter, either by accident or abuse.

The invention aims to counteract the above disadvantages, preferably while retaining the advantages. More specifically, the invention aims to provide for a relatively easy to reach high voltage interrupter on the one hand while reducing the chance of unwanted use of the interrupter.

Therefore, the invention provides for a battery electric vehicle truck, in particular the battery electric vehicle truck according to claim 1, comprising a skirt assembly. The skirt assembly comprises a bracket. The bracket comprises a plurality of mounting surfaces and is arranged to be fixed to a chassis of the truck. Additionally, the skirt assembly comprises a skirt attached to a first mounting surface via a skirt connection arrangement and a high voltage circuit interrupter arranged to, when activated, interrupt current flowing through a high voltage circuit of the truck, wherein the high voltage interrupter is provided on a second mounting surface. Preferably, the high voltage circuit can be manually activated, e.g. a cut-loop, a pull plug or a manual switch. The skirt comprises a break zone that once broken exposes the high voltage circuit interrupter, preferably made from a composite, for example a composite made using resin transfer molding (RTM). A bracket can be fixed to the chassis of the truck, preferably via a durable connection e.g. welding, said bracket providing mounting surfaces for additional technical features that can be connected to the chassis of the truck via the bracket. Such a connection may be a durable connection, e.g. welded, or a releasable connection, e.g. using bolts. An advantage of a mounting various components to the bracket, instead of directly mounting to the chassis may be that the chassis can be designed such that the bracket can be fixed instead of designing the chassis such that the various components are fixed to the chassis directly. Furthermore, using a bracket ease of assembly may be facilitated for example by letting the bracket have easier to reach locations, or by making it possible to connect the various features to the bracket before fixing the bracket to the chassis. The high voltage interrupter can be a cut-loop or a pull plug, or any other device arranged to interrupt a high voltage current circuit by interrupting a low voltage current circuit. In the case of a cut-loop, a wire can be cut, thereby interrupting the low voltage circuit. On its turn, the interruption of the low voltage circuit can interrupt the high voltage flow of a high voltage circuit.

The skirt is attached to the bracket. Said skirt acts as part of the outer housing of the truck, i.e. the outer wall. The skirt is provided on the truck mainly for aerodynamic properties as well as shielding components provided on the inside of the housing of the truck, such as electronics, to environmental conditions such as wind or rain. The skirt may furthermore be provided on the truck in order to comply with regulatory requirements, e.g. such as reducing sharp edges.

A high voltage circuit interrupter is provided to interrupt electrical energy being provided from the batteries to the motor and / or other high voltage components of the truck when needed. Additionally, the high voltage circuit interrupter is arranged to be manually activated, thereby also interrupting the current flowing through the high voltage circuit. This may be arranged by providing a relatively low voltage circuit comprising cables, wherein once said cables are severed by for example a scissor and the relatively low voltage circuit is interrupted, the high voltage circuit is also interrupted.

When the skirt is mounted to the bracket, the high voltage interrupter is covered by the skirt. On an assembled BEV truck, the skirt would be part of the outer housing of the truck, making the interrupter not readily accessible and protecting the interrupter from environmental effects and external effects, such as third parties or objects. In order to now facilitate accessibility of the interrupter, for example in case of an emergency, the skirt comprises a break zone that once broken exposes the high voltage circuit interrupter. By providing a skirt comprising a break zone that once broken exposes the high voltage circuit interrupter, it can be possible to access the interrupter in case of emergency by destroying the skirt, for example by using a blunt object such as a hammer.

In an advantageous embodiment, the skirt can be made from a composite, wherein the composite can be made using Resin Transfer Molding (RTM), Sheet Molding Compound (SMC) or other production processes that use resins or polymers in combination with fibers for reinforcement. In particular, the composites may contain glassfibres. Compared to more commonly used materials for production of a skirt, these production processes produce materials that are easier to clear out of the way during an emergency situation. Due to the brittle behavior of the material, it's relatively easy to break a skirt made from such a material and reach the interrupter. Breaking the skirt can be done with tools that emergency personal such as first responders commonly have available.

In a further advantageous embodiment, the brittle skirt can comprise a weakened section covering the interrupter, wherein the weakened section is more easily removed than the rest of the brittle skirt. For example, this can be done by locally providing relatively thin skirt compared to the rest of the skirt.

Additionally or alternatively, the brittle skirt can be made out of, or comprise, a thermoplastic material, e.g. ABS (Acrylonitrile butadiene styrene), ASA (Acrylonitrtile styrene acrylate), PP (Polypropylene), PVC (polyvinyl Chloride), PC (polycarbonate) or blends of these materials.

The skirt connecting arrangement can comprise a roller attached to the first mounting surface of the bracket and a bracket hook provided on the skirt, wherein a surface of the bracket hook can be arranged to abut to a surface of the roller in a circumferential direction. The bracket hook and roller allow for the skirt to be supported by the bracket while limiting the movement of the skirt to a rotational movement around the roller and a radially outward movement from the roller. By bolting the skirt, preferably on a side opposite to where the bracket hook is provided, the rotational and radially outward movement can also be limited, thereby reliably connecting the skirt to the bracket using a relatively low number of bolts compared to conventionally attached skirts.

The skirt and the second mounting surface can face in a same direction. This may facilitate ease of access while trying to access the interrupter and during assembly of the skirt assembly as these components do not hinder a person when accessing the skirt assembly. Preferably, the skirt and second mounting surface are facing in a same direction parallel to the skirt, further facilitating ease of access.

In addition to the interrupter, the truck can further comprise a high voltage circuit manual switch attached to the bracket, which can be provided between the bracket and the skirt, wherein also the high voltage circuit switch can be arranged to interrupt current flowing through the high voltage circuit in a first position and facilitate current flowing through a high voltage circuit in a second position. Providing a high voltage circuit manual switch can facilitate an additional way of interrupting the current flowing through the high voltage circuit. An advantage of using the switch instead of the interrupter is that the switch can be normally used to restore current flow. Optionally, the interrupter can also be disconnected and reconnected with a conventional electrical connector, for example when the interrupter is due for maintenance or needs to be replaced. The circuit switch can be provided on the bracket in order to centralize all the high voltage circuit interrupting means, which may help emergency personal or maintenance personal to locate interact with said means. In practice, it may be advantageous to interrupt the current of the high voltage circuit via the switch instead of the interrupter as no damage is caused to the vehicle. However, in case this is not possible or in case of an emergency where there needs to be a fast response, cutting a cut-loop is preferred.

The high voltage circuit switch can be accessible from the outside of the truck via an opening in the skirt, preferably via a closeable opening. Said opening in the skirt facilitates access to the switch, without the need of removing or destroying the skirt. Preferably, in order to protect the switch to environmental or other external effects, the opening can be closeable, for example by using a hatch or lid.

The bracket can be provided between a first front wheel housing and a first door of a cabin of the truck and wherein preferably a second bracket can be provided between a second front wheel housing and a second door of the cabin. This is an easy to reach location during maintenance and in case of emergency as there is no need to first move to a difficult to access location, such as under the truck. It may be advantageously to provide a bracket and bracket assembly on both sides of the truck, so that the high voltage circuit can be interrupted from both sides of the truck.

The bracket can be made from a durable and rigid material, preferably sheet metal.

Further advantageous aspects of the invention are set out in the description and appended claims.

The technical features described in the paragraphs and sentences above can be isolated from the context, and the isolated technical features from the different paragraphs and sentences can be combined. Such combinations are herewith specifically disclosed in this description.

The invention will further be elucidated on the basis of exemplary embodiments which are represented in the drawings. The exemplary embodiments are given by way of non-limitative illustration of the invention.

In the drawings:
Fig. 1 shows a side view of a BEV truck comprising a skirt assembly;
Fig. 2 shows an isometric view of a bracket of the bracket assembly;
Fig. 3 shows a side view of a bracket assembly fixed to a BEV truck;
Fig. 4A shows a front view of the bracket assembly fixed to a BEV truck;
Fig. 4B shows a front view of the bracket assembly of Fig. 4A in which the skirt has been made transparent;
Fig. 4C shows a close-up of the interrupter and main switch of the bracket assembly of Fig. 4B.

It is noted that the figures are only schematic representations that are given by way of non-limited examples. In the figures, the same or corresponding parts are designated with the same reference numerals.

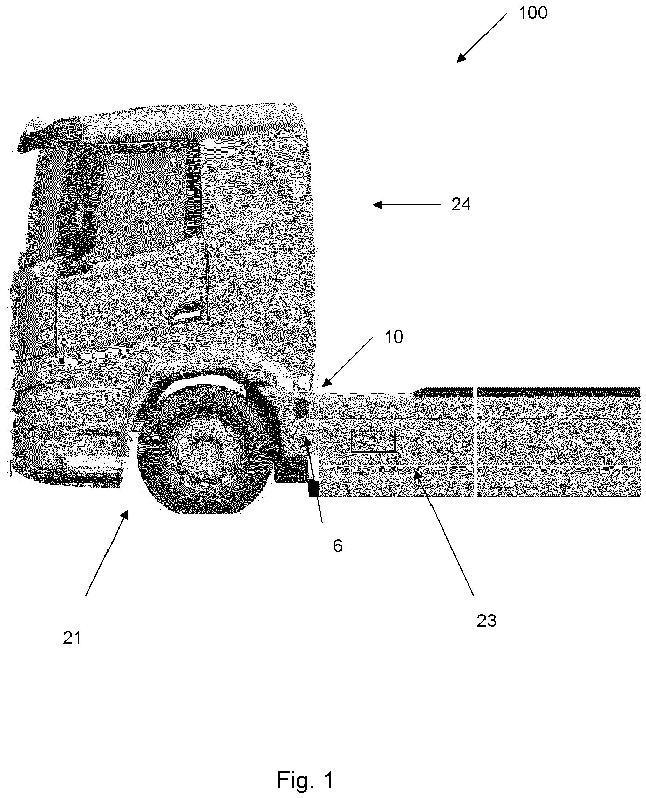

Fig. 1 shows a BEV 100 comprising a side skirt assembly 10. Once assembled, the bracket and the interrupter normally cannot be seen from the outside of the BEV truck 100 as they are covered by a skirt 6. The bracket is provided between a first front wheel housing 21 and a first side skirt 23 of a cabin 24 of the truck 100. Preferably, a second bracket is provided between a second front wheel housing and a second side skirt on the opposite side of the cabin. The interrupter is an electrical arrangement of a single use type, e.g. a plug that can be pulled, broken or cut, such as a cut-loop, which distinguishes it from a manual switch. It is used by human interaction, and thus different from a fuse.

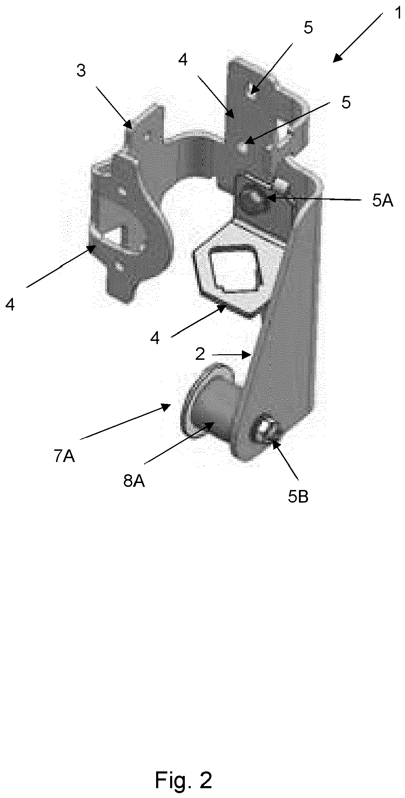

Turning to Fig. 2 a bracket 1 comprising a plurality of mounting surfaces 2, 3, 4 is depicted. The first mounting surface 2 of the plurality of mounting surfaces is arranged to have a skirt 6 attached to it via a skirt connecting arrangement 7. The skirt connecting arrangement 7 comprises two components, a roller 7A attached to the first mounting surface 2 of the bracket 1 and a bracket hook 7B provided on the skirt 6 (not depicted). The surface 8B of the bracket hook 7B is arranged to abut to a surface 8A of the roller in a circumferential direction. The second mounting surface 3 is arranged to have an interrupter (not depicted) connected to it, while further mounting surfaces 4 are arranged to connect additional means and / or are arranged to fix the bracket 1 to a chassis of a truck.

The bracket 1 is made from a durable and rigid material, in the shown example sheet metal. Furthermore, apertures 5 are provided to facilitate connecting the skirt connecting arrangement and additional means to the bracket 1 using bolts 5A and nuts 5B. However, it will be clear to the person skilled in the art that other suitable methods exist to connect the skirt connecting arrangement 7 and / or the additional means to the bracket 1, such as welding and using clips.

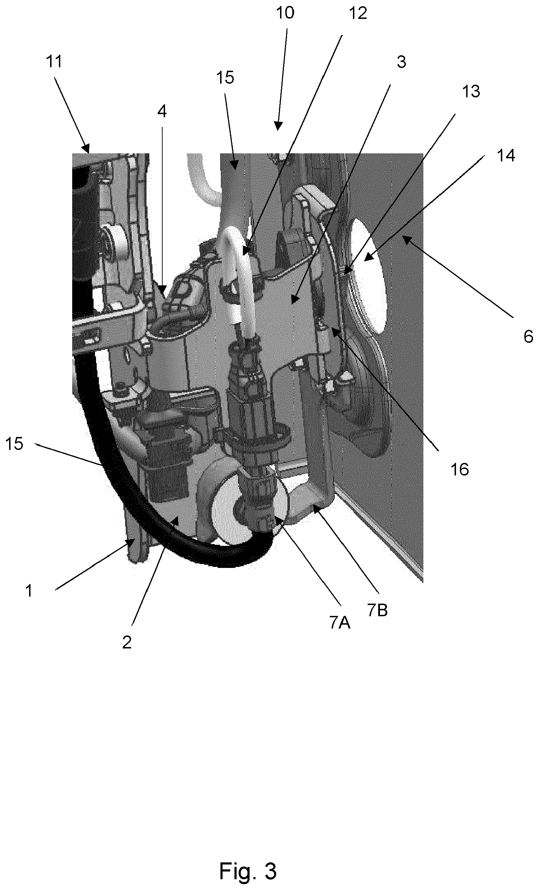

Referring to Fig. 3, a battery electric vehicle truck comprising a skirt assembly 10 is being shown. The skirt assembly 10 comprises the bracket 1, for example the bracket 1 shown in Fig. 2, wherein the bracket comprises a plurality of mounting surfaces 2, 3, 4. Additionally, the bracket 1 is arranged to be fixed to a chassis 11 of the truck. The assembly 10 further comprises a skirt 6 attached to a first mounting surface 2, via a skirt connecting arrangement 7, and a high voltage circuit cut-loop 12 arranged to, once cut, interrupt current flowing through a high voltage circuit 15 of the truck and thereby acting as a high voltage interrupter. The high voltage cut-loop 12 is provided on a second mounting surface 3.

The skirt 6 is made out of a brittle material. In the shown example, the brittle material is a glass fiber composite produced by Resin Transfer Molding (RTM). As a non-limiting example, the thickness of the skirt is nominally 3 mm and has a density around 1,50 - 1,95 g/cm^3. Additional, non-limiting exemplary mechanical properties can be found in the table below. However, it will be clear to the person skilled in the art that any material obtained by any production process may be used, as long as the manufactured skirt shows brittle behavior such that its skirt can be easily broken using conventional tools.

| **Mechanical Properties** | | |
|---|---|---|
| **Property** | ***Unit*** | **Specificaton requirement** |
| **Avg. Tensile strenght** | *[MPa]* | ≥ 70 |
| **Avg. Tensile Modulus** | *[GPa]* | ≥ 7,0 |
| **Avg. Elongation at break** | *[%]* | ≥ 1,2 |
| **Avg. flexural strength** | *[MPa]* | ≥ 125 |
| **Avg. E-Modulus** | *[GPa]* | ≥ 5,0 |
| **Impact Resistance** | *[kJ*/*m2]* | ≥ 40 |
| **Water Absorption** | *[gew %]* | ≤ 0,5 |

The skirt connecting arrangement comprises a roller 7A attached to the first mounting surface 2 of the bracket 1 and a bracket hook 7B provided on the skirt 6, wherein the surface of the bracket hook 7B is arranged to abut to a surface 8A of the roller 7A in a circumferential direction. As an example, the skirt 6 can be attached to the skirt assembly 10 by first placing the bracket hook 7B on the roller 7A. The skirt 6 can now be rotated in position, while the bracket hook 7B and roller 7A keep contact. Next, the skirt 6 can be attached to a part of the chassis 11 or a part of the bracket 1 to attach the skirt 6, for example using one or two bolts and nuts (not depicted). Using such a skirt connection arrangement 7 before bolting the skirt can be relatively easy connected to the bracket 1, allowing for fast repairs when the skirt 6 is broken. The skirt 6 and the second mounting surface 3 are facing in a same direction. This layout allows for ease of access from outside of the chassis of the truck when assembling or repairing the bracket 1 or means connected to the bracket 1 such as the cut-loop 12 or the skirt 6.

A high voltage circuit 13 manual switch has been provided between the bracket 1 and the skirt 6, while being attached to the bracket 1. The high voltage circuit manual switch 13 is arranged to manually interrupt the current flowing through the high voltage circuit 15 in a first position and facilitate current flowing through a high voltage circuit in a second position. The high voltage circuit switch 13 may be accessible from the outside of the truck via an opening 14 in the skirt 6. The high voltage circuit switch 13 is provided on a covering plate 16 such that, looking through the opening 14 to the circuit switch 13 from outside of the truck, the bracket 1 and the means connected to the bracket, with the exception of the circuit switch 13, are covered.

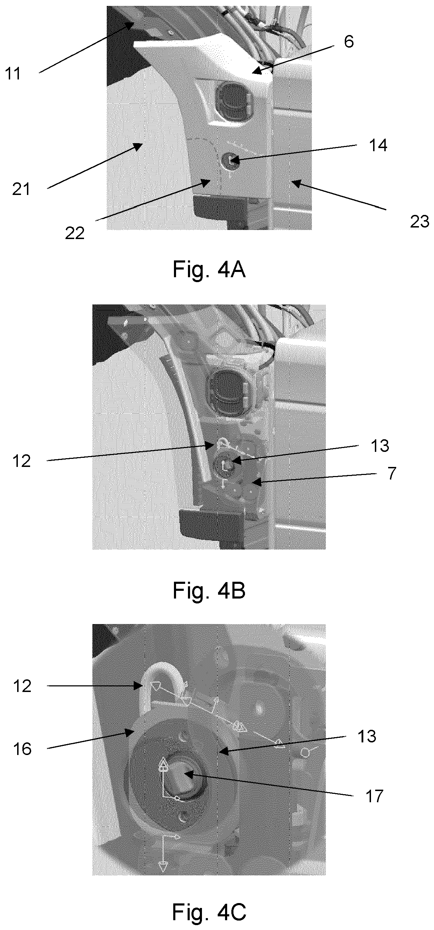

Fig. 4A shows the skirt assembly 10 from the outside of the truck. The skirt 6 covers the bracket 1, while leaving an opening 14 to access the high voltage switch 13. Preferably, the opening 14 can be covered using a removable lid, more preferably a lid that can be secured such that only authorized personal, for example using a key, can remove the lid and access the high voltage switch 13. The skirt 6 also has a weakened section 22 covering the cut-loop 12, wherein the outer perimeter of the weakened section is depicted as a dashed line. The dashed line has been added for clarity purposes, as the person skilled in the art realizes that such an optical marking is not required.

Fig. 4B shows the bracket assembly 10 of Fig. 4A, but the skirt 6 has been made transparent for illustration purposes. In this example, it can be clearly seen that if the skirt 6 is broken, i.e. is no longer present, the cut-loop 12 can be easily accessed. When the skirt 6 is not broken, i.e. is present on the skirt assembly 10, the cut-loop 12 is covered and cannot be accessed.

Fig. 4C shows a detail of the of the bracket assembly 10 of Fig. 4B, in which the skirt 6 has been made transparent for illustration purposes. The high voltage circuit switch 13 can be seen clearly, as well as the cut-loop 12. In a first position of a lever 17 of the circuit switch 13, the high voltage circuit 15 is interrupted and no current is supplied from the battery pack to the engine (not depicted). Once power can be restored to the engine, for example when maintenance is finished, the lever 17 can be moved to a second position, thereby restoring the current.

Many variations will be apparent to the skilled person in the art. Such variations are understood to be comprised within the scope of the invention as defined in the appended claims. For example, it is clear to the skilled person that various different conventional methods can be used to attach components. Additionally, the person skilled in the art recognizes that 'activation' of the interrupter means disconnecting the battery pack from other high voltage components such as the motor, such as for example `cutting', in case of a cut-loop, or 'removing' in case of a plug as these are commonly used practices in industry.

## Claims

1. Battery electric vehicle truck comprising a skirt assembly, wherein the skirt assembly comprises:
- a bracket comprising a plurality of mounting surfaces and
wherein the bracket is arranged to be fixed to a chassis of the truck;
- a skirt attached to a first mounting surface via a skirt connecting arrangement;
- a high voltage circuit interrupter provided on a second mounting surface arranged to, when activated, interrupt current flowing through a high voltage circuit of the truck;
wherein the skirt comprises a break zone that once broken exposes the high voltage circuit interrupter.

2. Battery electric vehicle truck according to claim 1, wherein the skirt connecting arrangement comprises a roller attached to the first mounting surface of the bracket and a bracket hook provided on the skirt, wherein a surface of the bracket hook is arranged to abut to a surface of the roller in a circumferential direction.

3. Battery electric vehicle truck according to claim 1 or 2, wherein the skirt and the second mounting surface are facing in a same direction, preferably a direction parallel to the skirt.

4. Battery electric vehicle truck according to any of the preceding claims, further comprising a high voltage circuit manual switch attached to the bracket, provided between the bracket and the skirt, wherein the high voltage circuit manual switch is arranged to interrupt current flowing through the high voltage circuit in a first position and to facilitate current flowing through a high voltage circuit in a second position.

5. Battery electric vehicle truck according to claim 4, wherein the high voltage circuit manual switch is accessible from the outside of the truck via an opening in the skirt, preferably via a closeable opening.

6. Battery electric vehicle truck according to any of the preceding claims, wherein the bracket is made from a durable and rigid material, preferably sheet metal.

7. Battery electric vehicle truck according to any of the preceding claims, wherein the bracket is provided between a first front wheel housing and a first side skirt of the truck, and wherein preferably a second bracket is provided between a second front wheel housing and a second side skirt of the truck.
